# DEMANDE DE BREVET EUROPEEN

(11) **EP 4 825 277 A1**
(43) Date de publication de la demande: **21.10.2026**
(21) Numéro de dépôt: 26168476.5
(22) Date de dépôt: 27.03.2026
(51) Int. Cl.: A47J 31/44, A47J 31/60

(54) **DISPOSITIF DE DISTRIBUTION D'UNE BOISSON AVEC UN CIRCUIT D EVACUATION DE LIQUIDE ET DISPOSITIF DE PRODUCTION DE BOISSON ASSOCIE**

(30) Priorité: 18.04.2025 FR 2504181
(71) Demandeur: SEB S.A., 69130 Ecully (FR)
(72) Inventeur: SABATTIER, Johan, 69134 Ecully Cedex (FR); MORIN, Gilles, 69134 Ecully Cedex (FR); DASSONVILLE, Yohan, 69134 Ecully Cedex (FR)
(74) Mandataire: SEB Développement

(57) **Abrégé**

La présente divulgation concerne un dispositif de distribution d'une boisson (17), comprenant :
- un port d'amenée de liquide (27),
- un port d'amenée d'eau et/ou de vapeur, et
- une chambre de traitement, le port d'amenée de liquide (27) et le port d'amenée d'eau et/ou de vapeur étant fluidiquement reliés à la chambre de traitement,
dans lequel une surface interne (25) du port d'amenée de liquide (27) comprend un orifice d'évacuation (24) relié à une buse d'évacuation, l'orifice d'évacuation (24) étant ménagé dans le port d'amenée de liquide (27) pour permettre une évacuation de liquide sous l'effet de la gravité lorsqu'aucune conduite d'amenée de liquide (22) n'est insérée dans le port d'amenée de liquide (27), l'orifice d'évacuation (24) étant configuré pour être obturé par la conduite d'amenée de liquide (22) lorsqu'elle est insérée dans le port d'amenée de liquide (27).

## Description

### DOMAINE TECHNIQUE

La présente demande concerne les dispositifs de distribution d'une boisson, dans lesquels un liquide est acheminé vers le dispositif par une conduite amovible insérée dans un port d'entrée du dispositif. Elle trouve notamment application dans les dispositifs distributeurs de café dans lesquels est intégré un système de distribution de lait, la conduite amovible étant une conduite d'alimentation en lait.

### ETAT DE LA TECHNIQUE

On connaît des distributeurs de boisson comprenant une tête de distribution munie d'un port d'entrée dans lequel peut être insérée une conduite d'alimentation en liquide. La tête de distribution peut également comprendre un port d'amenée de vapeur ou d'eau et notamment un port d'amenée de vapeur ou d'eau chaude. Par exemple, dans des distributeurs de lait moussé, un port d'entrée de lait dans lequel peut être insérée une conduite d'amenée de lait permet l'injection de lait, ce lait étant ensuite mélangé à la vapeur et/ou à l'eau et avantageusement également à de l'air dans une chambre de moussage de sorte à produire le lait moussé. Enfin, la tête de distribution permet la distribution du lait moussé vers un récipient grâce à une buse de distribution prévue à cet effet.

Il peut être souhaitable, dans de tels distributeurs, de faire circuler de l'eau dans le port d'amenée correspondant, alors même que la conduite d'amenée de lait n'est pas reliée au port d'amenée de lait, soit pour distribuer de l'eau chaude à un récipient, par exemple pour permettre la préparation de thé, soit pour rincer le port d'amenée de vapeur/eau ou la chambre de moussage. Toutefois, selon l'orientation du port d'amenée de lait et la pression de l'eau prévue pour le rinçage, un débit continu d'eau ou des gouttes d'eau peuvent s'écouler depuis la chambre de moussage dans le port d'amenée de lait, jusqu'à sortir de la tête de distribution par un orifice d'entrée du port d'amenée de lait. L'eau peut alors s'écouler sur un plan de travail sur lequel est disposé le distributeur. Lors d'une manipulation par un utilisateur du distributeur, et si l'eau dans le port d'amenée de lait est chaude, ceci peut également occasionner des brûlures sur la main de l'utilisateur.

Plus généralement, ces problèmes se posent pour tout distributeur comprenant un port d'amenée de liquide, un port d'amenée d'eau (notamment chaude) ou de vapeur et une zone de traitement sur laquelle débouchent les deux ports d'amenée.

### EXPOSE

Un objectif est donc d'empêcher, lors d'une circulation d'eau dans un dispositif de distribution de boisson, l'écoulement de liquide en dehors d'un port d'amenée de liquide/d'alimentation en liquide du dispositif de distribution de boisson via une entrée du port d'amenée de liquide/d'alimentation en liquide.

À cet effet, il est proposé un dispositif de distribution d'une boisson, comprenant :
- un port d'amenée de liquide configuré pour accueillir une conduite d'amenée de liquide,
- un port d'amenée d'eau et/ou de vapeur, et
- une chambre de traitement, le port d'amenée de liquide et le port d'amenée d'eau et/ou de vapeur étant fluidiquement reliés à la chambre de traitement,
dans lequel une surface interne du port d'amenée de liquide comprend un orifice d'évacuation fluidiquement relié à une buse d'évacuation, l'orifice d'évacuation étant ménagé à travers la surface interne du port d'amenée de liquide de sorte à permettre une évacuation de liquide hors du port d'amenée de liquide sous l'effet de la gravité lorsque la conduite d'amenée de liquide n'est pas insérée dans le port d'amenée de liquide, l'orifice d'évacuation étant configuré pour être obturé par la conduite d'amenée de liquide lorsque la conduite d'amenée de liquide est insérée dans le port d'amenée de liquide.

La présence d'un orifice d'évacuation relié fluidiquement à une buse d'évacuation permet que du liquide résiduel qui se trouve dans le port d'amenée de liquide, après un rinçage du dispositif ou, de manière générale, après toute utilisation du dispositif ne s'écoule pas en dehors du dispositif via une entrée du port d'amenée de liquide, notamment lorsque aucune conduite d'amenée de liquide n'est reliée au port d'amenée de liquide. Ceci empêche le liquide résiduel de se répandre sur un plan de travail ou sur les mains d'un utilisateur.

Selon certains modes de réalisation, le dispositif de distribution d'une boisson comprend une chambre de mélange positionnée en aval de la chambre de traitement, la buse d'évacuation étant une extrémité de sortie du dispositif de distribution de boisson reliée fluidiquement à la chambre de mélange.

Selon certains modes de réalisation, le dispositif de distribution est un dispositif de distribution de lait moussé, la chambre de traitement étant une chambre de moussage de lait et la chambre de mélange étant une chambre d'homogénéisation du lait moussé.

Selon certains modes de réalisation, le dispositif de distribution comprend une gouttière configurée pour évacuer du liquide depuis l'orifice d'évacuation vers la buse d'évacuation et présentant :
- une première extrémité débouchant sur l'orifice d'évacuation, et
- une deuxième extrémité prévue pour acheminer le liquide vers la buse d'évacuation.

Selon certains modes de réalisation, le dispositif de distribution de boisson comprend un canal de réception de liquide présentant une entrée configurée pour recevoir le liquide s'écoulant depuis la deuxième extrémité de la gouttière et une sortie reliée fluidiquement à la buse d'évacuation.

Selon certains modes de réalisation, dans une position d'utilisation du dispositif, la première extrémité est plus élevée que la deuxième extrémité selon une direction de hauteur du dispositif, de sorte que le liquide soit guidé depuis la première extrémité vers la deuxième extrémité sous l'effet de la gravité.

Selon certains modes de réalisation, le dispositif de distribution de boisson comprend en outre un canal d'amenée d'air configuré pour être alimenté par un port d'amenée d'air et un canal d'amenée de liquide configuré pour être alimenté par le port d'amenée de liquide, et le canal d'amenée d'air et le canal d'amenée de liquide comprennent chacun une sortie respective débouchant dans la chambre de traitement, de préférence à proximité d'un orifice d'entrée de la chambre de traitement.

Selon certains modes de réalisation, un conduit d'écoulement principal relié fluidiquement au port d'amenée d'eau et/ou de vapeur comprend une restriction de section configurée pour générer une dépression permettant l'aspiration dans la chambre de traitement d'un liquide provenant du port d'amenée de liquide et d'air provenant du port d'amenée d'air.

Selon certains modes de réalisation, le dispositif de distribution de boisson comprend un port de rinçage configurée pour permettre l'acheminement d'eau et/ou de vapeur dans le port d'amenée de liquide de sorte à rincer la surface interne du port d'amenée de liquide. Selon certains modes de réalisation, le dispositif de distribution comprend en outre un canal d'amenée de liquide configuré pour être alimenté par le port d'amenée de liquide, et le port d'amenée de liquide présente une entrée et le canal d'amenée de liquide présente une sortie, la sortie du canal d'amenée de liquide débouchant dans un conduit d'écoulement principal relié fluidiquement au port d'amenée d'eau et/ou de vapeur, le conduit d'écoulement principal présentant en outre une sortie débouchant dans la chambre de traitement et l'orifice d'évacuation étant situé entre l'entrée du port d'amenée de liquide et la sortie du canal d'amenée de liquide.

Selon certains modes de réalisation, dans une position d'utilisation du dispositif de distribution, une position de la sortie du port d'amenée de liquide est plus élevée qu'une position de l'entrée du port d'amenée de liquide selon une direction de hauteur du dispositif.

Selon certains modes de réalisation, le port d'amenée de liquide comprend une butée configurée pour empêcher une insertion de la conduite d'amenée de liquide dans le port d'amenée de liquide au-delà d'une distance prédéfinie, l'orifice d'évacuation étant situé entre une entrée du port d'amenée de liquide et la butée.

Selon certains modes de réalisation, l'orifice d'évacuation est situé dans une moitié inférieure de la surface interne dans une position d'utilisation du dispositif de distribution de boisson.

Selon certains modes de réalisation, le port d'amenée de liquide comprend :
∘ une entrée munie d'un orifice de connexion de la conduite d'amenée de liquide,
∘ une sortie débouchant en amont de la chambre de traitement, et ∘ l'orifice d'évacuation.

La présente divulgation porte en outre sur un appareil de production d'une boisson, comprenant une sortie de distribution d'eau et/ou de vapeur et un dispositif de distribution de boisson tel que défini précédemment, le port d'amenée d'eau et/ou de vapeur étant propre à être relié fluidiquement à la sortie de distribution d'eau et/ou de vapeur.

Selon certains modes de réalisation, le dispositif de distribution de boisson comprend une chambre de mélange positionnée en aval de la chambre de traitement, et la buse d'évacuation est une buse de sortie non reliée à la chambre de mélange et disposée en dehors du dispositif de distribution de boisson.

Selon certains modes de réalisation, l'appareil de production est une machine à café et l'appareil de production comprend une tête de distribution, le dispositif de distribution de boisson étant agencé de manière amovible dans la tête de distribution et la tête de distribution de boisson comprend au moins une buse de distribution de café et un logement de réception du dispositif de distribution de boisson, la tête de distribution comprenant un orifice de passage de la conduite d'amené de liquide et la sortie de distribution d'eau et/ou de vapeur.

### DESCRIPTION DES FIGURES

D'autres caractéristiques, buts et avantages ressortiront de la description qui suit, qui est purement illustrative et non limitative, et qui doit être lue en regard des dessins annexés sur lesquels :
[Fig. 1] représente un appareil de production d'une boisson selon la présente divulgation.
[Fig. 2a], [Fig. 2b] représentent un dispositif de distribution d'une boisson selon deux vues différentes, le dispositif de distribution faisant partie de l'appareil de production de boisson de la figure 1.
[Fig. 2c] et [Fig. 2d] représentent une partie du dispositif de distribution de boisson illustré sur les figures 2a et 2b, selon deux autres vues,
[Fig .3a] et [Fig. 3b] représentent un insert de distribution de boisson pouvant être relié de manière amovible à une sortie de boisson du dispositif de distribution de boisson.
[Fig. 4] représente un orifice de distribution de l'insert de distribution, selon un mode de réalisation particulier.

Sur l'ensemble des figures, les mêmes éléments ou des éléments similaires sont désignés par des références identiques.

### DESCRIPTION DÉTAILLÉE DE MODES DE RÉALISATION

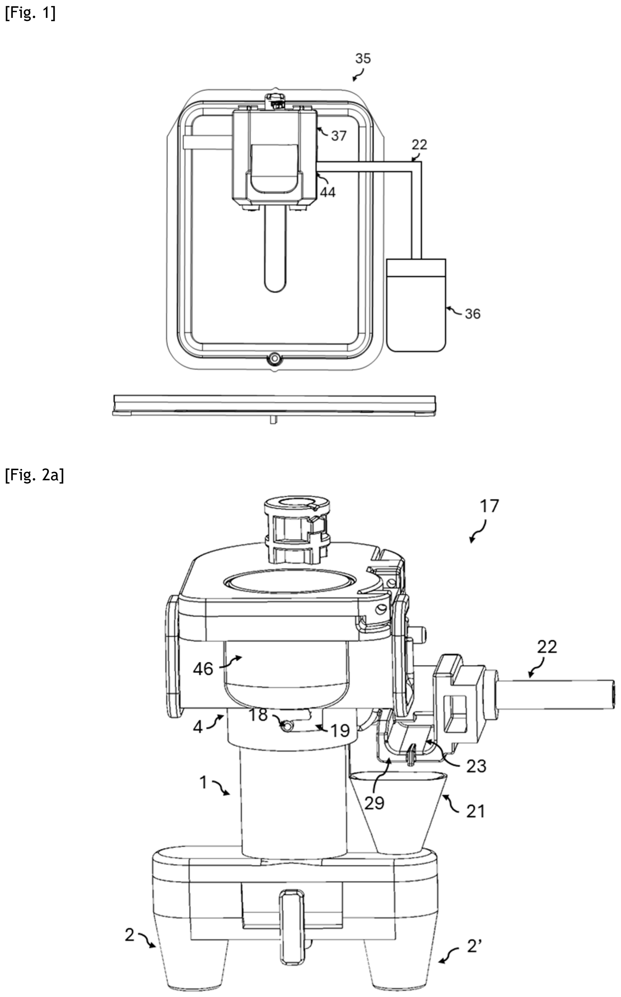

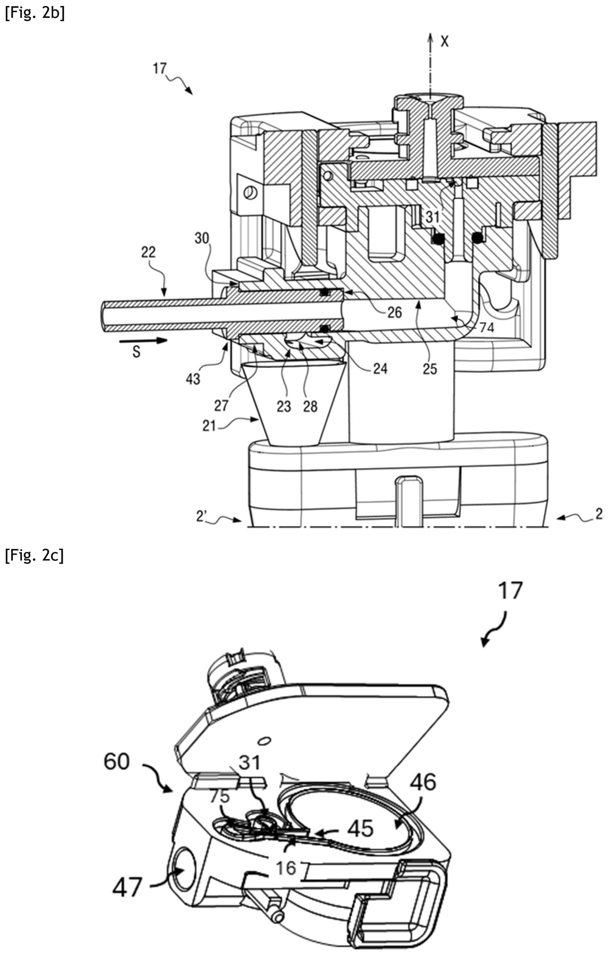

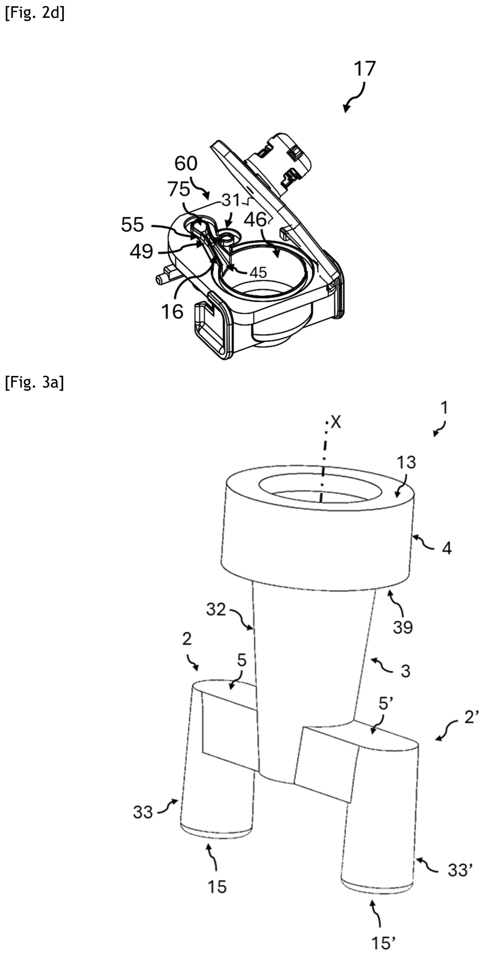

Un appareil de production 35 d'une boisson, illustré sur la figure 1, comprend une tête de distribution 37. La tête de distribution 37 est prévue pour accueillir, dans un logement prévu à cet effet, un dispositif de distribution de boisson 17, illustré sur les figures 2a et 2b dans son ensemble, et en partie sur les figures 2c et 2d. De préférence, le dispositif de distribution 17 est accueilli dans la tête de distribution 37 de manière amovible.

L'appareil de production 35 est notamment un appareil de production de café. Dans ce mode de réalisation, la tête de distribution 37 comprend au moins une buse de distribution de café vers un récipient.

Le dispositif de distribution de boisson 17 comprend une sortie de boisson, prévue pour acheminer une boisson depuis une chambre de mélange 46 dans laquelle la boisson est mélangée vers un insert de distribution 1. La chambre de mélange 46 elle-même est de préférence reliée fluidiquement à une chambre de traitement 16 destinée à permettre un traitement d'un liquide non traité de sorte à obtenir la boisson. La chambre de mélange 46 ainsi que la chambre de traitement 16 font toutes deux partie du dispositif de distribution de boisson 17.

L'insert de distribution 1 est fixé à la sortie de boisson du dispositif de distribution de boisson 17, de préférence de manière amovible de sorte à permettre un nettoyage plus aisé de l'insert de distribution 1 et du dispositif de distribution 17, indépendamment l'un de l'autre. Toutefois, selon certains modes de réalisation, l'insert de distribution 1 est solidaire du dispositif de distribution 17.

Selon certains modes de réalisation, la chambre de traitement 16 peut être une chambre de moussage, le liquide non moussé étant moussé dans la chambre de traitement 16 avant de rejoindre la chambre de mélange 46 pour y être mélangé, et donc homogénéisé, puis de s'écouler à travers la sortie de boisson, sous la forme d'une boisson moussée. Le liquide s'écoule ensuite dans l'insert de distribution 1 afin d'être distribué dans un récipient placé en dessous de la tête de distribution 37.

La chambre de traitement 16 peut être alimentée par un port d'amenée de liquide 27 du dispositif de distribution de boisson 17, ainsi que par un port d'amenée de vapeur et/ou d'eau 47 du dispositif de distribution de boisson 17. Le port d'amenée de vapeur et/ou d'eau est préférentiellement un port d'amenée de vapeur ou d'eau chaude et en variante un port d'amenée de vapeur ou d'eau chaude ou froide.

Le port d'amenée de vapeur et/ou d'eau peut être relié à une sortie de distribution d'une boisson - notamment d'eau chaude et/ou de vapeur - de l'appareil de production 35. Par exemple, la sortie de distribution d'eau et/ou de vapeur débouche dans la tête de distribution 37. Le dispositif de distribution de boisson 17 est configuré pour être fixé à la sortie de distribution d'eau et/ou de vapeur. En variante, la sortie de distribution d'eau et/ou de vapeur débouche sur une face avant de l'appareil de production à l'écart de la tête de distribution.

Le port d'amenée de liquide 27 peut quant à lui être relié par le biais d'une conduite d'amenée de liquide 22 à un réservoir 36 configuré pour accueillir un liquide non moussé, tel que du lait voire du café, qui est destiné à être moussé dans la chambre de traitement 16. La tête de distribution 37 comprend un orifice de passage 44 destiné à permettre le passage de la conduite d'amenée de liquide 22 dans la tête de distribution 37, afin qu'elle puisse être reliée au port d'amenée de liquide 27 du dispositif de distribution de liquide 17.

Le dispositif de distribution 17 ainsi que l'insert de distribution 1 feront, dans la suite de la présente description, l'objet de sections détaillant des modes de réalisation particuliers de ces deux éléments.

### Dispositif de distribution

En référence aux figures 2a à 2d, le dispositif de distribution 17 comprend une chambre de traitement 16, ainsi qu'un port d'amenée de liquide 27 alimentant un canal d'amenée de liquide 74, et un port d'amenée d'eau et/ou de vapeur 47 alimentant un canal d'amenée d'eau et/ou de vapeur. Comme indiqué précédemment, la fixation du dispositif de distribution 17 dans la tête de distribution 37 de l'appareil de production de boisson 35 peut être assurée, au moins partiellement, par le biais d'une fixation du port d'amenée d'eau et/ou de vapeur sur une sortie d'eau et/ou de vapeur de l'appareil de production 35, la sortie d'eau et/ou de vapeur débouchant dans la tête de distribution 37.

En variante, la fixation du dispositif de distribution 17 à l'appareil de production de boisson 35 peut être assurée, au moins partiellement, par le biais d'une fixation du port d'amenée d'eau et/ou de vapeur sur une sortie d'eau et/ou de vapeur de l'appareil de production 35, la sortie de distribution d'eau et/ou de vapeur débouchant sur une face avant de l'appareil de production à l'écart de la tête de distribution.

Selon certains modes de réalisation, la chambre de traitement 16 débouche dans la chambre de mélange 46 par le biais d'un canal de sortie 45. Ce canal de sortie 45 peut être configuré pour impartir un mouvement au moins partiellement non vertical, notamment cyclonique, à la boisson. Notamment, le canal de sortie 45 débouche dans la chambre de mélange 46 selon une direction sensiblement tangentielle à une surface interne de la chambre de mélange 46, de sorte à générer ce mouvement cyclonique.

Le dispositif de distribution 17 comprend également avantageusement un port d'amenée d'air. Dans ce cas, un canal d'amenée d'air alimenté par le port d'amenée d'air débouche au niveau d'une sortie 31, en amont de la chambre de traitement 16.

Dans le cas où la chambre de traitement 16 est une chambre de moussage, un conduit d'écoulement principal s'étend depuis une sortie 75 du canal d'amenée d'eau et/ou de vapeur sur une face principale 60 du distributeur de boisson 17. Le conduit d'écoulement principal comprend une première portion 55 en amont de la restriction de section 49, ainsi qu'une deuxième portion en aval de la restriction de section 49, la deuxième portion formant la chambre de traitement 16.

le port d'amenée d'eau et/ou de vapeur 47 comprend une restriction de section 49. La sortie 31 du canal d'amenée d'air et la sortie du canal d'amenée de liquide 74 débouchent toutes deux en aval de la restriction de section 49, à proximité de la restriction de section 49.

Par exemple, dans une position d'utilisation du dispositif de distribution 17, la sortie 31 du canal d'amenée d'air débouche latéralement dans le conduit d'écoulement principal, tandis que le canal d'amenée de liquide 27 débouche verticalement, par-dessous, dans le conduit d'écoulement principal, en aval de la restriction de section 49.

La restriction de section 49 permet une aspiration du liquide, de l'air afin de permettre leur mélange dans la chambre de traitement 16 de sorte à produire un liquide moussé.

Puis, un canal de sortie 45 de la chambre de traitement 16 débouche dans la chambre de mélange 46 selon une trajectoire tangentielle, de sorte à permettre un mélange additionnel du liquide moussé et donc une homogénéisation de celui-ci dans la chambre de mélange 46.

La chambre de traitement 16 peut, non limitativement, être une chambre de moussage de lait et cacao, de lait et chocolat en poudre, de lait et sirop, ou encore de café et cacao.

La sortie du canal d'amenée de liquide 74 est de préférence située à une position verticale plus élevée, dans la position normale d'utilisation du dispositif de distribution de boisson 17, que l'entrée 30 du port d'amenée de liquide 27, de sorte à éviter, du fait de la gravité, l'écoulement intempestif de liquide dans le port d'amenée d'eau et/ou de vapeur 47 en l'absence de la dépression. L'axe X définit une direction de hauteur du dispositif de distribution de boisson 17 et, plus généralement, de l'appareil de production de boisson 35, ainsi que de l'insert de distribution 1, cet axe X étant disposé verticalement dans la position normale d'utilisation du dispositif de distribution de boisson 17.

Le port d'amenée de liquide 27 et le canal d'amenée de liquide 74, visibles en détail sur la figure 2b, présentent une surface interne 25. Le port d'amenée de liquide 27 est configuré pour permettre l'insertion dans le dispositif de distribution 17 d'une conduite d'amenée de liquide 22 - notamment, d'une conduite d'amenée de lait.

La conduite d'amenée de liquide 22 est ainsi reçue dans au moins une partie du port d'amenée de liquide 27, cette partie s'étendant depuis une entrée 30 du port d'amenée de liquide 27 qui comprend un orifice de connexion apte à permettre le raccord de la conduite d'amenée de liquide 22 au port d'amenée de liquide 27. Selon un fonctionnement normal du dispositif de distribution 17, le liquide s'écoule dans la conduite d'amenée de liquide 22, puis dans le port d'amenée de liquide 27, selon un sens normal d'écoulement noté S.

Un orifice d'évacuation 24 débouche sur la surface interne 25 du port d'amenée de liquide 27. L'orifice d'évacuation 24 débouche dans la partie du port d'amenée de liquide 27 configurée pour recevoir la conduite d'amenée de liquide 22, de sorte que, lorsque la conduite d'amenée de liquide 22 est insérée dans le port d'amenée de liquide 27, l'orifice d'évacuation 24 est obturé par une surface externe de la conduite d'amenée de liquide 22, et n'interfère pas avec le passage du liquide dans le port d'amenée de liquide 27.

En revanche, lorsque la conduite d'amenée de liquide 22 n'est pas logée dans le port d'amenée de liquide 27, l'orifice d'évacuation 24 est libre. Lorsqu'un liquide circule dans le port d'amenée de liquide 27 selon un sens opposé au sens normal d'écoulement S, l'orifice d'évacuation 24 permet que ce liquide soit évacué du port d'amenée de liquide 27 avant de rejoindre l'entrée 30. En effet, en l'absence de l'orifice d'évacuation 24, un tel liquide serait susceptible de s'écouler en dehors du port d'amenée de liquide 27 via l'entrée 30 et de se répandre soit sur un plan de travail sur lequel est disposé l'appareil de production 35, soit sur des mains d'un utilisateur.

Notamment, un tel écoulement de liquide selon un sens opposé au sens S se produit lors d'un rinçage du port d'amenée de liquide 27 et du canal d'amenée de liquide 74. Un tel rinçage peut par exemple être effectué au moyen d'eau et/ou de vapeur acheminée dans le port d'amenée de liquide 27 par un port de rinçage/nettoyage (non représenté) du dispositif de distribution 17 et/ou par le port d'amenée d'eau et/ou de vapeur 47.

De préférence, l'orifice d'évacuation 24 débouche sur une moitié inférieure de la surface interne 25 dans une position normale d'utilisation du dispositif de distribution 17, de sorte à faciliter l'engouffrement du liquide dans l'orifice d'évacuation 24 sous l'effet de la gravité.

L'orifice d'évacuation 24 est agencé de sorte à permettre l'évacuation de liquide s'écoulant dans le port d'amenée de liquide 27 vers une buse d'évacuation. L'orifice d'évacuation 24 est ainsi fluidiquement relié à la buse d'évacuation. Par « fluidiquement relié », on entend toute liaison permettant d'acheminer le liquide depuis l'entrée de l'orifice d'évacuation 24 jusqu'à la buse d'évacuation. Notamment, une telle liaison fluidique comprend une liaison par une conduite continue, mais également une liaison discontinue, c'est-à-dire que la liaison fluidique peut être assurée par un ensemble constitué d'une conduite apte à être alimentée par l'orifice d'évacuation 24 et d'un canal de réception débouchant au droit de la conduite et alimentant la buse d'évacuation, le canal de réception n'étant pas continu avec la conduite. On donnera un exemple d'un tel mode de réalisation plus tard dans la description.

Selon un mode de réalisation, l'orifice d'évacuation 24 débouche sur une gouttière 23 permettant d'évacuer le liquide depuis le port d'amenée de liquide 27 jusqu'à la buse d'évacuation. La gouttière 23 présente une première extrémité 28 reliée à l'orifice d'évacuation 24 sur son côté opposé à la surface interne 25 du port d'amenée de liquide 27. La gouttière 23 présente également une deuxième extrémité 29 fluidiquement reliée à la buse d'évacuation. La première extrémité 28 et la deuxième extrémité 29 sont distinctes, de sorte que la gouttière 23 permet avantageusement d'acheminer le liquide de l'orifice d'évacuation 24 à la buse d'évacuation, quand bien même l'orifice d'évacuation 24 et la buse d'évacuation seraient éloignés l'un de l'autre.

La gouttière 23 présente, selon des modes de réalisation, au moins une portion non verticale permettant à la surface interne de la gouttière 23 de guider le liquide depuis la première extrémité 28 jusqu'à la deuxième extrémité 29. En outre, préférentiellement, lorsque le dispositif de distribution 17 se trouve dans une position normale d'utilisation, la première extrémité 28 se trouve verticalement plus haut que la deuxième extrémité 29, ce qui permet le passage du liquide de la première extrémité 28 à la deuxième extrémité 29 sous l'effet de la gravité, sans qu'aucune autre force ou intervention extérieure ne soit nécessaire.

Comme illustré sur les figures 2a, 2b, un mode de réalisation prévoit que la deuxième extrémité 29 de la gouttière 23 est libre, et débouche verticalement au droit d'un canal de réception 21 du liquide, le canal de réception 21 débouchant lui-même sur la buse d'évacuation. Ainsi, le liquide s'écoulant depuis la deuxième extrémité 29 s'écoule nécessairement dans le canal de réception 21 et rejoint la buse d'évacuation.

Le canal de réception 21 peut présenter une section interne évasée en direction de la deuxième extrémité 29, de sorte à faciliter la réception du liquide hors de la deuxième extrémité 29, y compris en cas d'écoulement légèrement turbulent ou à débit élevé.

Selon certains modes de réalisation, une butée 26 est prévue dans le port d'amenée de liquide 27, permettant la venue en butée de la conduite d'amenée de liquide 22 en fin de course d'insertion de celle-ci dans le port d'amenée de liquide 27. La butée 26 se trouve en aval de l'orifice d'évacuation 24 dans le port d'amenée de liquide 27 selon le sens normal S d'écoulement du liquide, de sorte à ne pas entraver l'obturation de l'orifice d'évacuation 24 par la surface externe de la conduite d'amenée de liquide 22.

Alternativement à la butée 26, ou de manière complémentaire, un arrêt de la course d'insertion de la conduite d'amenée de liquide 22 dans le port d'amenée de liquide 27 peut être assuré par une collerette d'arrêt 43 prévue sur la conduite d'amenée de liquide 22.

La buse d'évacuation peut prendre plusieurs formes.

Selon un mode de réalisation, la buse d'évacuation est une buse prévue spécifiquement pour permettre l'évacuation, grâce à l'orifice d'évacuation 24, de liquide présent dans le port d'amenée de liquide 27.

Selon d'autres modes de réalisation, une buse du dispositif de distribution de boisson 17 prévue pour assurer une fonction distincte de l'évacuation de liquide résiduel ou de liquide de nettoyage circulant dans le canal d'amenée de liquide 74 est utilisée comme buse d'évacuation, de sorte à permettre une meilleure compacité du dispositif de distribution de boisson 17. Par exemple, une extrémité de sortie 2, 2' prévue pour distribuer une boisson vers un récipient sert également de buse d'évacuation. Comme on le verra par la suite, l'extrémité de sortie 2, 2' peut être prévue sur un insert de distribution relié à une sortie de boisson du dispositif de distribution 17.

### Insert de distribution

L'insert de distribution 1 peut prendre différentes formes.

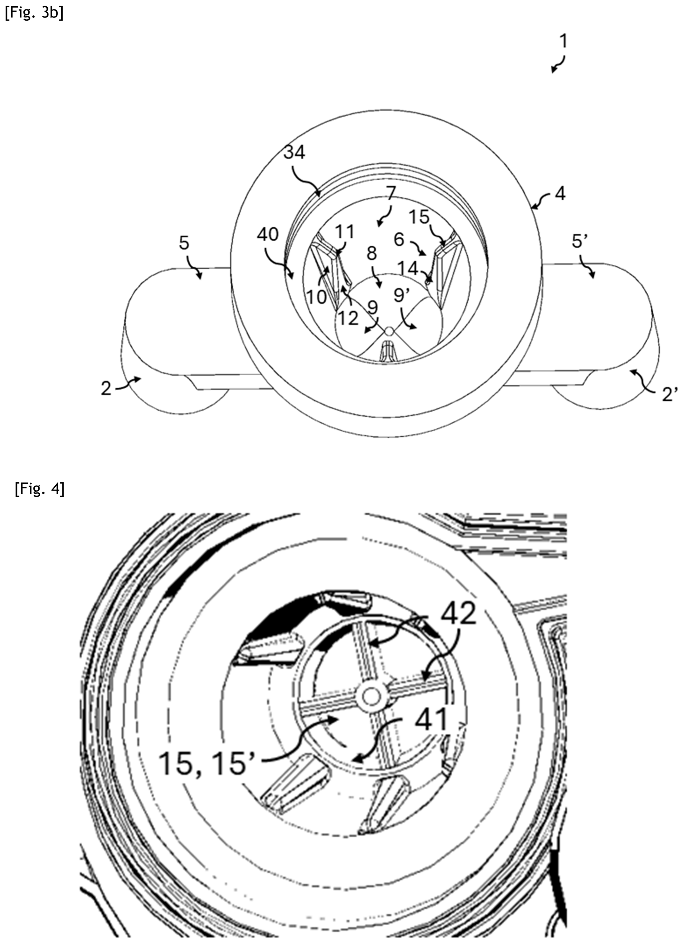

De manière préférée, il est prévu un insert de distribution 1 tel que représenté sur les figures 3a et 3b. Selon ce mode de réalisation, l'insert de distribution 1 comprend une chambre de circulation 3 dans laquelle est reçue la boisson provenant de la chambre de mélange 46, par le biais d'une extrémité d'entrée 13 de l'insert de distribution 1. Une surface interne 7 de la chambre de circulation 3 permet à la boisson de circuler entre l'extrémité d'entrée 13 et un ou des orifices de passage 9, 9'. Le mode de réalisation représenté sur les figures 3a, 3b comprend deux orifices de passage 9, 9'. Les orifices de passage 9, 9' sont disposés soit dans la surface interne 7, soit dans un fond 8 de la chambre de circulation 3.

Chaque orifice de passage 9, 9' est relié fluidiquement non seulement à la chambre de mélange 46, par l'intermédiaire de la chambre de circulation 3, mais également à l'extrémité de sortie 2, 2' destinée à acheminer la boisson depuis l'orifice de passage 9, 9' à un orifice de distribution 15, 15' correspondant.

Lorsque la boisson, notamment la boisson moussée, entre dans la chambre de circulation 3, sa trajectoire peut ne pas suivre la surface interne 7 selon une direction principale définie par un axe principal X de la chambre de circulation 3. Notamment, la chambre de mélange 46 peut impartir un mouvement non-vertical, par exemple cyclonique, à la boisson. Par exemple, dans le cas d'un mouvement cyclonique, la trajectoire de la boisson le long de la surface interne 7 est sensiblement hélicoïdale.

Dans ce qui suit, on utilisera le terme « longueur » pour désigner la dimension d'un élément selon la direction principale. On définira en outre par les termes :
- « direction radiale » : toute direction s'étendant perpendiculairement à la direction principale et passant par un axe défini par la direction principale,
- « direction circonférentielle » : toute direction s'étendant perpendiculairement à la direction principale et ne passant pas par un axe défini par la direction principale.

Lors de l'arrivée de la boisson au niveau de l'orifice de passage 9, 9' - le cas échéant, de chaque orifice de passage 9, 9' - l'écoulement à travers l'orifice de passage 9, 9' n'est pas parfaitement vertical (à comprendre ici comme s'étendant le long de la surface interne 7 selon la direction principale).

Ceci est particulièrement problématique dans le cas où l'insert de distribution 1 comprend deux (ou plus) extrémités de sortie 2, 2', puisque le mouvement non vertical de la boisson créé une asymétrie entre le débit traversant un premier orifice de passage 9 et le débit traversant un deuxième orifice de passage 9', de sorte que les deux récipients placés en dessous des deux extrémités de sortie (2, 2') ne reçoivent pas la même quantité de liquide.

Toutefois, la non-verticalité de l'écoulement dans la chambre de circulation 3 est problématique y compris lorsque l'insert de distribution 1 comprend un unique orifice de passage 9 et une unique extrémité de sortie 2, puisque cette non-verticalité augmente le risque d'un déversement de liquide en dehors d'un récipient disposé en dessous de l'extrémité de sortie, et même un déversement de liquide sur une main d'un utilisateur, qui peut occasionner des brûlures. En outre, cela peut conduire à réduire le débit de distribution de boisson en sortie de l'insert de distribution 1 voire à créer une congestion et à gêner le bon fonctionnement du dispositif de distribution 17.

Afin de pallier ce problème, la surface interne 7 de la chambre de circulation 3 comprend une ou plusieurs nervures 6. Chaque nervure 6 s'étend en saillie de la surface interne 7, le long de celle-ci. Par « en saillie », on entend que chaque nervure 6 s'étend sensiblement perpendiculairement à la surface interne 7 de la chambre de distribution 3, dans un plan comprenant l'axe principal X.

Lors d'un écoulement non-vertical de la boisson le long de la surface interne 7, la nervure, qui s'étend entre l'extrémité d'entrée 13 et l'orifice de passage 9, 9', se trouve dans la trajectoire de l'écoulement, de sorte que la composante non-verticale du mouvement de la boisson est entravée par la présence de la nervure 6, et qu'on obtient un écoulement sensiblement vertical directement en amont du ou des orifice(s) de passage 9, 9'.

Ainsi, la présence de la ou des nervure(s) 6 assure un écoulement sensiblement vertical du liquide hors de l'extrémité de sortie 2. Lorsque l'insert de distribution 1 comprend deux extrémités de sortie 2, 2', la ou les nervure(s) 6 permet(tent) en outre d'obtenir deux volumes de boisson sensiblement identiques en sortie de chaque extrémité de sortie 2, 2'.

Selon certains modes de réalisation, la surface interne 7 comprend deux nervures 6, voire trois à six nervures 6. Ceci permet une obstruction adéquate de la composante non-verticale de l'écoulement de boisson, pour toute position circonférentielle de la surface interne 7.

De sorte à maximiser davantage l'obstruction de la composante non-verticale de l'écoulement de boisson, la nervure 6 s'étend sur 50%, voire 70%, voire jusqu'à 100% d'une longueur de la surface interne 7.

Lorsque l'insert de distribution 1 comprend plusieurs orifices de passage 9, 9', la nervure 6 ne s'étend préférentiellement pas dans un fond hémisphérique 8 de la chambre de circulation 3, le fond 8 comprenant les orifices de passage 9, 9'. Le fait que la nervure 6 ne s'étende pas dans le fond 8 permet d'éviter un écoulement préférentiel de la boisson vers l'un des deux orifices de passage 9, 9'.

Selon un mode de réalisation particulier, représenté sur la figure 4, l'un des orifices de distribution 15, 15' (ou éventuellement chacun des orifices de distribution 15, 15') est délimité par une paroi circonférentielle 41. Une paroi de division 42 du flux de sortie s'étend de part en part dans au moins un des orifices de distribution 15, 15', notamment dans chacun des deux orifices de distribution 15, 15', de préférence selon un diamètre du ou des orifices de distribution 15, 15'. La paroi de division 42 diminue le risque que le liquide s'écoulant à travers l'orifice de distribution 15, 15' ne colle à la paroi circonférentielle 41. Cet effet est particulièrement avantageux lorsque le liquide s'écoulant à travers l'orifice de distribution 15, 15' est un liquide moussé, auquel cas le liquide est encore plus susceptible de coller à la paroi circonférentielle 41.

Dans le mode de réalisation illustré à titre exemplatif sur la figure 4, l'insert de distribution 1 comprend un unique orifice de passage 9, 9' et une unique extrémité de sortie 2, 2' comportant un unique orifice de distribution 15, 15'

La paroi de division 42 permet notamment, lors d'un rinçage du dispositif avec de l'eau chaude, un meilleur drainage et nettoyage des surfaces ayant été en contact avec un liquide, notamment avec du lait, les protéines contenues dans le lait ayant tendance à s'accrocher aux surfaces avec lesquelles elles sont en contact.

Avantageusement, deux parois de division 42 peuvent s'étendre à travers l'orifice de distribution 15, 15' - le cas échéant, à travers chaque orifice de distribution 15, 15' - formant ainsi une croix. La présence de deux parois de division 42 centre d'autant plus l'écoulement de liquide à travers l'orifice de distribution 15, 15'.

En référence à la figure 3b, une forme particulière de nervure 6 est représentée. La nervure 6 présente deux surfaces principales 10 s'étendant directement en saillie depuis la surface interne 7. Les surfaces principales 10 sont celles qui obstruent directement la composante non-verticale de l'écoulement de boisson dans la chambre de circulation 3. De préférence, l'angle formé entre chacune des deux surfaces principales 10 et la surface interne 7 est le même, de sorte que la nervure 6 assure la même obstruction de la composante non verticale, que celle-ci soit dans le sens des aiguilles d'une montre ou dans le sens contraire.

La nervure 6 comprend également une surface de jonction 12 s'étendant sur toute sa longueur, entre les deux surfaces principales 10.

Selon un mode de réalisation, la surface de jonction 12 est divisée en plusieurs portions. Une première portion 14 se trouve à proximité des orifices de passage 9, 9' tandis qu'une deuxième portion 15 se trouve à proximité de l'extrémité d'entrée 13. La première portion 14 est inclinée par rapport à la deuxième portion de sorte que les surfaces principales 10 sont sensiblement triangulaires. Ceci présente l'avantage de maximiser l'obstruction causée par la nervure 6 en une position de la surface interne 7, selon la direction principale, où il est le plus nécessaire d'obstruer l'écoulement. En fonction du profil d'écoulement attendu dans la chambre de circulation 3, l'homme du métier saura positionner une portion de liaison 11 de la nervure 6 - à savoir, la portion liant la première portion 14 et la deuxième portion 15 et constituant la dimension maximale de la nervure 6 perpendiculairement à la surface interne 7.

Selon certains modes de réalisation, la première portion 14 est évasée en direction des orifices de passage 9, 9'. En d'autres termes, la première portion 14 est, perpendiculairement aux surfaces principales 10, fine à proximité de la portion de liaison 11 et plus épaisse à proximité des orifices de passage 9, 9'.

Une projection de la première portion 14 sur l'axe principal X peut présenter une longueur plus importante qu'une projection de la deuxième portion 15 sur l'axe principal X. Ainsi, l'obstruction permise par la nervure 6 est plus importante à proximité de l'extrémité d'entrée 13 - là où l'écoulement est le plus rapide, car provenant directement de la chambre de mélange 46 - qu'à proximité des orifices de passage 9, 9', là où l'écoulement a été ralenti par les frottements avec la surface interne 7 et par les nervures 6 elles-mêmes.

Notamment, de sorte à maximiser l'obstruction le plus tôt possible dans l'écoulement de boisson au sein de la chambre de circulation 3, la deuxième portion 15 peut s'étendre sensiblement perpendiculairement à l'axe principal X. La première portion 14 peut, quant à elle, s'étendre sensiblement parallèlement à l'axe principal X.

De préférence, la nervure 6 s'étend en saillie de la surface interne 7 sensiblement selon la direction principale, de sorte à maximiser, pour une dimension maximale donnée de la nervure 6, l'étendue de la surface interne 7 sur laquelle la nervure 6 assure sa fonction d'obstruction de la composante non-verticale de l'écoulement.

En outre, la surface interne 7 peut être prévue pour présenter une section, perpendiculairement à la direction principale, qui diminue depuis l'extrémité d'entrée 13 jusqu'à l'orifice de passage 9, 9'. Ainsi, la surface interne 7 de la chambre de circulation 3 présente une forme tronconique. L'écoulement de la boisson le long de la surface interne est, du fait de cette section décroissante en direction de l'orifice de passage 9, 9', guidé vers l'orifice de passage 9, 9'.

La surface externe 32 de la chambre de circulation 3 peut quant à elle adopter une section droite ou tronconique, notamment tronconique dont la section évolue proportionnellement avec la section de la surface interne 7 selon la direction principale.

Selon certains modes de réalisation, l'extrémité d'entrée 13 comprend une collerette de fixation 4. La collerette 4 permet la fixation de l'insert de distribution 1 sur la sortie de boisson du dispositif de distribution 17.

Avantageusement, la collerette 4 présente un diamètre externe plus élevé qu'un diamètre externe maximal de la chambre de circulation (c'est-à-dire, dans le cas d'une chambre de circulation 3 de section externe tronconique, qu'un diamètre externe de la chambre de circulation 3 à proximité de la collerette 4), de sorte qu'un épaulement 39 est défini entre la surface externe de la collerette 4 et la surface externe de la chambre de circulation 3, permettant ainsi un appui pour les doigts d'un utilisateur qui tente de relier l'insert de distribution 1 au dispositif de distribution 17.

La collerette 4 peut en outre présenter une portion de liaison 34 à la chambre de circulation 3, configurée pour assurer la fixation de la collerette 4 sur la sortie de boisson du dispositif de distribution 17. Selon certains modes de réalisation, la portion de liaison 34 a un diamètre interne sensiblement égal à un diamètre interne maximal de la chambre de circulation (c'est-à-dire, dans le cas d'une chambre de circulation 3 de section interne tronconique, qu'un diamètre interne de la chambre de circulation 3 à proximité de la collerette 4). Selon d'autres modes de réalisation, la portion de liaison 34 a un diamètre interne supérieur au diamètre interne maximal de la chambre de circulation, de sorte à former une butée 40 contre laquelle la sortie de boisson du dispositif de distribution 17 peut venir en butée lors d'une insertion de la sortie de boisson dans l'insert de distribution 1.

Eventuellement, la liaison entre la collerette 4 et l'insert de distribution 1 peut être du type à baïonnette (cf. figure 2a), avec une patte de fixation radiale 18 prévue en saillie de la surface externe de la collerette 4 et coopérant avec un orifice de fixation en forme de L 19, l'orifice de fixation étant disposé soit de manière traversante dans une paroi de la sortie de distribution de boisson, soit de manière traversante dans une paroi 41 prévue pour entourer à la fois la sortie de boisson du dispositif de distribution 17 et la collerette 4 (tel que représenté sur la figure 2a).

Les deux extrémités de sortie 2, 2' d'un insert de distribution 1 prévu pour assurer une distribution vers deux récipients sont illustrées sur la figure 3a. Chaque extrémité de sortie 2, 2' débouche, d'une part, sur un orifice de passage 9, 9' correspondant et, d'autre part, sur un orifice de distribution 15, 15' correspondant.

De préférence, chaque extrémité de sortie 2, 2' présente deux portions.

Une portion d'écartement 5, 5' permet d'éloigner l'écoulement de liquide de la chambre de circulation 3, et s'étend donc préférentiellement perpendiculairement à l'axe principal X. La dimension de la portion d'écartement 5, 5' est configurée pour permettre la distribution vers deux récipients distincts, ces deux récipients devant pouvoir être disposés côte-à-côte en dessous des extrémités de sortie 2, 2', de sorte qu'un centre de chaque récipient soit disposé sensiblement au droit de l'orifice de distribution 15, 15' correspondant.

Une portion de distribution 33, 33' de chaque extrémité de sortie 2, 2' s'étend depuis la portion d'écartement 5, 5', sensiblement perpendiculairement à celle-ci (et donc à l'axe principal X).

Selon certains modes de réalisation, chaque portion de distribution 33, 33' présente une surface externe évasée en direction de l'orifice de distribution 15, 15'. En outre, chaque portion de distribution 33, 33' peut présenter une surface interne évasée en direction de l'orifice de distribution 15, 15' correspondant. Cette géométrie facilite l'écoulement de la boisson en limitant les zones mortes dans la portion de distribution 33, 33' et donc les pertes de charge associées.

## Revendications

1. Dispositif de distribution d'une boisson (17), comprenant :
- un port d'amenée de liquide (27) configuré pour accueillir une conduite d'amenée de liquide (22),
- un port d'amenée d'eau et/ou de vapeur (47), et
- une chambre de traitement (16), le port d'amenée de liquide (27) et le port d'amenée d'eau et/ou de vapeur étant fluidiquement reliés à la chambre de traitement (16),
dans lequel une surface interne (25) du port d'amenée de liquide (27) comprend un orifice d'évacuation (24) fluidiquement relié à une buse d'évacuation, l'orifice d'évacuation (24) étant ménagé à travers la surface interne (25) du port d'amenée de liquide (27) de sorte à permettre une évacuation de liquide hors du port d'amenée de liquide (27) sous l'effet de la gravité lorsque la conduite d'amenée de liquide (22) n'est pas insérée dans le port d'amenée de liquide (27), l'orifice d'évacuation (24) étant configuré pour être obturé par la conduite d'amenée de liquide (22) lorsque la conduite d'amenée de liquide (22) est insérée dans le port d'amenée de liquide (27).

2. Dispositif de distribution d'une boisson (17) selon la revendication 1 comprenant une chambre de mélange (46) positionnée en aval de la chambre de traitement (16), la buse d'évacuation étant une extrémité de sortie (2, 2') du dispositif de distribution de boisson (17) reliée fluidiquement à la chambre de mélange (46).

3. Dispositif de distribution d'une boisson (17) selon la revendication 2, dans lequel le dispositif de distribution (17) est un dispositif de distribution de lait moussé, la chambre de traitement (16) étant une chambre de moussage de lait et la chambre de mélange (46) étant une chambre d'homogénéisation du lait moussé.

4. Dispositif de distribution d'une boisson (17) selon l'une quelconque des revendications 1 à 3, dans lequel le dispositif de distribution (17) comprend une gouttière (23) configurée pour évacuer du liquide depuis l'orifice d'évacuation (24) vers la buse d'évacuation et présentant :
- une première extrémité (28) débouchant sur l'orifice d'évacuation (24), et
- une deuxième extrémité (29) prévue pour acheminer le liquide vers la buse d'évacuation.

5. Dispositif de distribution d'une boisson (17) selon la revendication 4, comprenant un canal de réception de liquide (21) présentant une entrée configurée pour recevoir le liquide s'écoulant depuis la deuxième extrémité (29) de la gouttière (23) et une sortie reliée fluidiquement à la buse d'évacuation.

6. Dispositif de distribution d'une boisson (17) selon l'une des revendications 4 et 5 dans lequel, dans une position d'utilisation du dispositif, la première extrémité (28) est plus élevée que la deuxième extrémité (29) selon une direction de hauteur (X) du dispositif, de sorte que le liquide soit guidé depuis la première extrémité (28) vers la deuxième extrémité (29) sous l'effet de la gravité.

7. Dispositif de distribution d'une boisson (17) selon l'une quelconque des revendications 1 à 6, comprenant en outre un canal d'amenée d'air configuré pour être alimenté par un port d'amenée d'air et un canal d'amenée de liquide (74) configuré pour être alimenté par le port d'amenée de liquide (27), et dans lequel le canal d'amenée d'air et le canal d'amenée de liquide (74) comprennent chacun une sortie respective débouchant dans la chambre de traitement (16), de préférence à proximité d'un orifice d'entrée de la chambre de traitement (16).

8. Dispositif de distribution d'une boisson (17) selon la revendication 7, dans lequel un conduit d'écoulement principal relié fluidiquement au port d'amenée d'eau et/ou de vapeur (47) comprend une restriction de section (49) configurée pour générer une dépression permettant l'aspiration dans la chambre de traitement (16) d'un liquide provenant du port d'amenée de liquide (27) et d'air provenant du port d'amenée d'air.

9. Dispositif de distribution de boisson (17) selon l'une quelconque des revendications 1 à 8, comprenant un port de rinçage configuré pour permettre l'acheminement d'eau et/ou de vapeur dans le port d'amenée de liquide (27) de sorte à rincer la surface interne (25) du port d'amenée de liquide (27).

10. Dispositif de distribution d'une boisson (17) selon l'une quelconque des revendications 1 à 9, comprenant en outre un canal d'amenée de liquide (74) configuré pour être alimenté par le port d'amenée de liquide (27), et dans lequel le port d'amenée de liquide (27) présente une entrée (30) et le canal d'amenée de liquide (74) présente une sortie, la sortie du canal d'amenée de liquide (74) débouchant dans un conduit d'écoulement principal relié fluidiquement au port d'amenée d'eau et/ou de vapeur (47), le conduit d'écoulement principal présentant en outre une sortie débouchant dans la chambre de traitement (16) et l'orifice d'évacuation (24) étant situé entre l'entrée (30) du port d'amenée de liquide (27) et la sortie du canal d'amenée de liquide (74).

11. Dispositif de distribution d'une boisson (17) selon la revendication 10, dans lequel, dans une position d'utilisation du dispositif de distribution (17), une position de la sortie du canal d'amenée de liquide (74) est plus élevée qu'une position de l'entrée (30) du port d'amenée de liquide (27) selon une direction de hauteur (X) du dispositif.

12. Dispositif de distribution d'une boisson (17) selon l'une quelconque des revendications 1 à 11, dans lequel le port d'amenée de liquide (27) comprend une butée (26) configurée pour empêcher une insertion de la conduite d'amenée de liquide (22) dans le port d'amenée de liquide (27) au-delà d'une distance prédéfinie, l'orifice d'évacuation (24) étant situé entre une entrée (30) du port d'amenée de liquide (27) et la butée (26).

13. Appareil de production d'une boisson (35), comprenant une sortie de distribution d'eau et/ou de vapeur et un dispositif de distribution de boisson (17) selon l'une quelconque des revendications 1 à 12, le port d'amenée d'eau et/ou de vapeur (47) étant propre à être relié fluidiquement à la sortie de distribution d'eau et/ou de vapeur.

14. Appareil de production d'une boisson (35) selon la revendication 13, dans lequel le dispositif de distribution de boisson (17) est selon l'une quelconque des revendications 1 et 4 à 7 et comprend une chambre de mélange (46) positionnée en aval de la chambre de traitement (16), et dans lequel la buse d'évacuation est une buse de sortie non reliée à la chambre de mélange (46) et disposée en dehors du dispositif de distribution de boisson (17).

15. Appareil de production d'une boisson (35) selon la revendication 13 ou 14, dans lequel l'appareil de production (35) est une machine à café et dans lequel l'appareil de production comprend une tête de distribution (37), le dispositif de distribution de boisson (17) étant agencé de manière amovible dans la tête de distribution (37) et la tête de distribution de boisson comprend au moins une buse de distribution de café et un logement de réception du dispositif de distribution de boisson (17), la tête de distribution (37) comprenant un orifice de passage (44) de la conduite d'amené de liquide (22) et la sortie de distribution d'eau et/ou de vapeur.
